# EUROPÄISCHE PATENTSCHRIFT

(11) **EP 1 927 609 B1**
(45) Veröffentlichungstag und Bekanntmachung des Hinweises auf die Patenterteilung: **04.11.2009**
(21) Anmeldenummer: 07022733.5
(22) Anmeldetag: 23.11.2007
(51) Int. Cl.: C08G 18/63, C08G 18/67

(54) **Mehrkomponenten-Polyurethan / Vinylester-Hybridschaumsystem und seine Verwendung**
Multi-part polyurethane/vinyl ester hybrid foam system and its use
Système de mousse hybride à plusieurs composants à base de polyuréthane et d'éther de vinyle et son utilisation

(30) Priorität: 29.11.2006 DE 102006056402
(43) Veröffentlichungstag der Anmeldung: 04.06.2008
(73) Patentinhaber: HILTI Aktiengesellschaft, 9494 Schaan (LI)
(72) Erfinder: Reinheimer, Arne, 87660 Irsee (DE)
(74) Vertreter: Wildi, Roland

(56) Entgegenhaltungen:
- EP-A- 1 006 133
- WO-A-03/037948
- US-A- 5 091 436

## Beschreibung

Gegenstand der vorliegenden Erfindung ist ein Mehrkomponenten-Polyurethan/Vinylester-Hybridschaumsystem zur Bildung eines Gradientschaums mit weichen und harten Schaumbereichen sowie dessen Verwendung als Material zum Beschichten von Oberflächen und zum Ausschäumen von Öffnungen, Kabel- und Rohrdurchführungen in Wänden, Böden und/oder Decken von Gebäuden zum Zwecke des Schallschutzes und/oder Brandschutzes.

Mehrkomponenten-Polyurethan-Schaumsysteme zum Ausschäumen von Öffnungen, Kabel- und Rohrdurchführungen in Wänden, Böden und/oder Dekken von Gebäuden zum Zwecke des Brandschutzes sind bekannt. Die wesentliche Aufgabe der Polymermatrix eines solchen Schaumsystems ist es, als Bindemittel für die eigentlichen Brandschutzadditive zu fungieren, beispielsweise intumeszierende Materialien auf der Grundlage eines Säurebildners, einer Kohlenstoff-liefernden Verbindung und eines Gasbildners oder aber auch von Blähgraphit, blähfähigen Schichtsilikaten und/oder zusätzlichen organischen oder anorganischen Flammschutzmitteln.

Neben den eigentlichen Brandschutzanforderungen treten jedoch bei solchen Schaumsystemen für den Brandschutz immer mehr Zusatzanforderungen, wie eine Verbesserung des Schallschutzes etc., in den Vordergrund. Diesen Anforderungen muß im wesentlichen durch die Eigenschaften des polymeren Bindemittels Rechnung getragen werden.

Die handelsüblichen Polyurethan-Schaumsysteme zum Ausschäumen von Öffnungen, Kabel- und Rohrdurchführungen in Wänden, Böden und/oder Dekken von Gebäuden zum Zwecke des Brandschutzes ergeben üblicherweise Hartschäume. Andererseits sind auch Brandschutzstopfen aus Polyurethan-Weichschaum für den gleichen Zweck bekannt, die allerdings nicht vor Ort aufgeschäumt, sondern nach dem Aufschäumen in die Öffnungen eingepaßt werden. Während die Hartschäume auf Polyurethanbasis aufgrund ihrer strukturellen Vorteile, namentlich ihrer höheren mechanischen Belastungsfähigkeit von Vorteil sind, sind sie für den Schallschutz weniger günstig, da sie für die Minderung der Übertragung von Körperschall aufgrund ihrer Härte weniger gut geeignet sind. Andererseits zeigen Polyurethan-Weichschäume Vorteile beim Schallschutz durch ihre bessere Dämpfung der Übertragung von Körperschall, sind aber in ihren mechanischen Eigenschaften den Hartschäumen unterlagen. Die Unterdrückung des Schrumpfens des Schaumes während der Entwicklung eines Schaumproduktes ist bei Hartschäumen deutlich einfacher zu erzielen als bei Weichschäumen. Für die Anwendung von Polyurethan-Schaumsystemen für den Brandschutz, die gleichzeitig für den Schallschutz geeignet sind, waren daher Produkte, welche die Vorteile eines Weichschaums mit denen eines Hartschaums verknüpfen, ideal.

Aus der US-Patentschrift 5,091,436 A sind Polyurethan/ungesättigte Polyester-Hybridschäume in Form von Hartschäumen bekannt, die als Holzersatz eingesetzt werden. Solche harten Hybridschäume werden unter Verwendung von Polyisocyanaten, Polyolen, Katalysatoren, Wasser als Treibmittel und eines Hydroxyvinylesters durch Aufschäumen in einer Form hergestellt. Diese harten Hybridschäume mögen jedoch aufgrund ihrer Hartschaumstruktur als Schallschutzmaterialien nicht zu befriedigen.

Die Aufgabe der vorliegenden Erfindung besteht somit darin, ein Polyurethan-Schaumsystem für den passiven Brandschutz bereitzustellen, welches die vorteilhaften mechanischen und Brandschutz-Eigenschaften von Polyurethan-Hartschaumsystemen bei gleichzeitig den besseren Schallschutzeigenschaften von Polyurethan-Weichschaumsystemen aufweist.

Es hat sich überraschenderweise gezeigt, daß diese Aufgabe mit Hilfe eines Mehrkomponenten-Polyurethan/Vinylester-Hybridschaumsystems gelöst werden kann, welches nach dem Aufschäumen und Aushärten einen Polyurethan-Hartschaum ergibt, der über weiche und harte Bereiche verfügt und daher die günstigen Eigenschaften eines Hartschaums mit den vorteilhaften Schallschutzeigenschaften eines Weichschaums verbindet.

Gegenstand der Erfindung ist daher das Mehrkomponenten-Polyurethan/Vinylester-Hybridschaumsystem nach Anspruch 1. Die Unteransprüche betreffen bevorzugte Ausführungsformen dieses Erfindungsgegenstandes sowie die Verwendung dieses Hybridschaumsystems zum Beschichten von Oberflächen und zum Ausschäumen von Öffnungen, Kabel- und Rohrdurchführungen in Wänden, Böden und/oder Decken von Gebäuden zum Zwecke des Schallschutzes und/oder Brandschutzes.

Gegenstand der Erfindung ist daher das Mehrkomponenten-Polyurethan /Vinylester-Hybridschaumsystem zur Bildung eines Gradientschaums mit weichen und harten Schaumbereichen, mit einer Polyol-Komponente (A), die mindestens ein Polyol mit einer OH-Funktionalität von mindestens 2, einen Katalysator für die Reaktion des Polyols mit dem Polyisocyanat, mindesten ein polymerisierbares Vinylmonomer, Wasser oder ein Treibmittel auf der Grundlage eines verdichteten oder verflüssigten Gases als Schaumbildner enthält, einer Polyisocyanat-Komponente (B), die mindestens ein Polyisocyanat mit einer NCO-Funktionalität von mindestens 2 enthält, und einer Komponente (C), die einen Katalysator für die Polymerisation des Vinylmonomers enthält, wobei die Komponenten (A) bis (C) reaktionsinhibierend voneinander getrennt vorliegen und erst beim Vermischen unter Polykondensation und Polymerisation reagieren, das dadurch gekennzeichnet ist, daß die Polyol-Komponente (A) als Vinylmonomer ein Vinylestergemisch aus mindestens einem polymerisierbaren Hydroxyvinylester und mindestens einem verzweigten, mindestens trifunktionellen, polymerisierbaren Vinylester und die Polyisocyanat-Komponente (B) einen thermisch aktivierbaren Radikalbildner als Katalysator für die Polymerisation der Vinylmonomeren enthält, mit der Maßgabe, das der Gewichtsanteil des Vinylestergemischs größer ist als sowohl der Gewichtsanteil des mindestens einen Polyols als auch der Gewichtsanteil des mindestens einen Polyisocyanats.

Beim bestimmungsgemäßen Aufschäumen des erfindungsgemäßen Hybridschaumsystems nach dem Vermischen der Polyol-Komponente (A) mit der Polyisocyanat-Komponente (B) wird der in der Reaktionsmischung vorliegende thermisch aktivierbare Radikalbildner erst durch die im Verlaufe der Polyurethanschaumbildung freigesetzte Reaktionswärme aktiviert und löst erst dann die Polymerisation des in dem Reaktionsgemisch enthaltenen Vinylestergemisches aus. Da das Reaktionsgemisch bei dieser Reaktion einen Temperatur-Gradienten aufweist, dadurch daß die durch die Polyurethanreaktion freigesetzte Reaktionswärme in den Außenbereichen schneller abgeführt wird als im Inneren der Mischung, ergibt sich eine Aktivierung des thermisch aktivierbaren Radikalbildners nur im Inneren des Reaktionsgemisches, nicht jedoch im Randbereich der Mischung. Dies hat zur Folge, daß durch die rasche Wärmeabführung die erforderliche Aktivierungstemperatur des Radikalbildners in den Randbereichen nicht erreicht wird. Demzufolge reagiert von der Reaktionsmischung in diesen äußeren Bereichen lediglich der Polyurethan-Weichschaumanteil des Hybridschaums aus, während im Inneren der Mischung durch die gleichzeitig erfolgende Polymerisation des Vinylestergemisches ein vernetztes Vinylpolymer gebildet wird, welches zu harten Bereichen innerhalb der Mischung führt.

In dieser Weise wird ein Schaum erhalten, der im Oberflächenbereich die Eigenschaften eines Weichschaums aufweist und im Inneren Domänen oder Bereiche mit harter Schaumstruktur besitzt, wobei der Übergang von der harten Domäne zur weichen Domäne einen abnehmenden Härtegradienten aufweist.

In dieser Weise erhält man eine Schaumprodukt, welches einerseits die guten mechanischen Festigkeiten eines Hartschaums im Kern aufweist und in den Außenbereichen für den Schallschutz günstige Weichschaumbereiche.

Das in der Polyol-Komponente (A) enthaltende Vinylestergemisch enthält als Hydroxyvinylester vorzugsweise 2-Hydroxyethyl(meth)acrylat und/oder 2-Hydroxypropyl(meth)acrylat und als verzweigten, mindestens trifunktionellen Vinylester Trimethylolpropan-tri(meth)acrylat und/oder ein trifunktionelles oder höherfunktionelles Vinylesterurethanharz.

In dem in der Polyol-Komponente (A) des erfindungsgemäßen Hybridschaumsystems enthaltenden Vinylestergemisch beträgt das Gewichtsverhältnis von polymerisierbarem Hydroxyvinylester zu dem verzweigten, mindestens trifunktionellen, polymerisierbaren Vinylester vorzugsweise 1:10 bis 10:1, noch bevorzugter 2:5 bis 5:1.

Gemäß einer weiteren bevorzugten Ausführungsform der Erfindung enthält das Vinylestergemisch zusätzlich mindestens einen difunktionellen, polymerisierbaren Hydroxyvinylester aus der 1,4-Butandiolmethacrylat, ethoxyliertes 2-Bisphenol-A-dimethacrylat und Hydroxyvinylester der folgenden allgemeinen Formel (I): 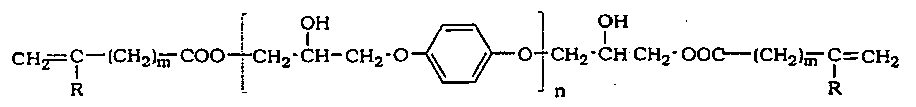 in der R Wasserstoff oder eine C₁-C₄-Alkylgruppe, m Null oder eine ganze Zahl mit einem Wert von 1 bis 4 und n 1 oder 2 bedeuten, umfassenden Gruppe.

Gemäß einer weiteren bevorzugten Ausführungsform kann das Vinylestergemisch der Polyol-Komponente (A) mindestens ein oder mehrere zusätzliche Vinylmonomere enthalten, vorzugsweise mindestens einen Vertreter der Alkyl(meth)acrylate, Aryl(meth)acrylate, Hydroxyalkyl(meth)acrylate, (Meth)-acrylamide, Ether(meth)acrylate, mehrfunktionelle vernetzende (Meth)acrylate, Vinylesterurethanharze, alkoxylierte Bisphenol-A-di(meth)acrylate, alkoxylierte Bisphenol-F-di(meth)acrylate, (Meth)acrylsäure, (Meth)acrylsäureanhydrid und (Meth)-acrylnitril umfassenden Gruppe.

Vorzugsweise wird als zusätzliches Vinylmonomer dieser Art mindestens ein Vertreter der Methyl(meth)acrylat, Ethyl(meth)acrylat, n-Butyl(meth)acrylat, Isobutyl(meth)acrylat, n-Hexyl(meth)acrylat, 2-Ethylhexyl(meth)-acrylat, Isodecyl(meth)acrylat, (Meth)acrylsäureester 13,0, (Meth)acrylsäureester 17,4, Cyclohexyl(meth)acrylat, Isobornyl(meth)acrylat, Benzyl(meth)acrylat, 3,3,5-Trimethylcyclohexyl(meth)acrylat, Isotridecyl(meth)acrylat, Stearyl(meth)acrylat, 2-Hydroxyethyl(meth)acrylat, Hydroxypropyl(meth)acrylat, 2-Dimethylaminoethylmethacrylat, 3-Dimethylaminopropyl(meth)acrylamid, 2-Trimethylammoniumethyl(meth)acrylatchlorid, 3-Trimethylammoniumpropyl(meth)acrylamidchlorid, 2-tert.-Butylaminoethyl(meth)acrylat, (Meth)acrylamid, N-Methylol(meth)acrylamid, N-Butoxymethyl(meth)acrylamid, Ethyltriglykol(meth)acrylat, Tetrahydrofurfuryl(meth)acrylat, Methoxypolyethylenglykol-350-(meth)-acrylat, Methoxypolyethylenglykol-500-(meth-acrylat, Methoxypolyethylenglykol-750-(meth)acrylat, Methoxypolyethylenglykol-1000-(meth)acrylat, (Meth)-acrylsäureester ethoxylierter (25 mol EO) C₁₆-C₁₈-Fettalkoholgemische, Butyldiglykol(meth)acry)at, Allyl-(meth)acrylat, Ethylenglykoldi(meth)acrylat, Diethylenglykoldi(meth)acrylat, Triethylenglykoldi(meth)-acrylat, Tetraethylenglykoldi(meth)acrylat, Polyethylenglykol-200-di(meth)acrylat, Polyethylenglykol-400-di(meth)acrylat, Polyethylenglykol-600-di(meth)acrylat, Polyethylenglykol-1000-di(meth)acrylat, 1,3-Butandioldi(meth)acrylat, 1,4-Butandioldi(meth)acrylat, 1,6-Hexandioldi(meth)acrylat, 1, 12-Dodecanidioldi(meth)-acrylat, Glycerindi(meth)acrylat, Trimethylolpropantri(meth)-acrylat, Diurethandi(meth)acrylat, Umsetzungsprodukte aus polyfunktionellem Isocyanat, gegebenenfalls mehrwertigem Alkohol und/oder gegebenenfalls mehrwertigem Amin und einem Hydroxylalkyl(meth)acrylat), ethoxyliertes (2 EO) Bisphenol-A-di(meth)acrylat, ethoxyliertes (10 EO) Bisphenol-A-di(meth)acrylat, (Meth)acrylsäure, (Meth)acrylsäureanhydrid, Maleinsäure-mono-2-(meth)acryloyloxyethylester, N-(2-(Meth)acryloyloxyethyl)-ethylenharnstoff, N-(2-(Meth)-acryloyloxyethyl)-ethylenharnstoff, Ethylencyanhydrin und Acetoncyanhydrin umfassenden Gruppe eingesetzt.

Die bei der chemischen Bezeichnung der oben genannten Vinylester angewandte Nomenklatur "...(meth)acrylat" bedeutet, daß sowohl die betreffende Methacrylatverbindung als auch die Acrylatverbindung umfaßt sein soll. Methyl(meth)acrylat steht also Methylmethacrylat und Methylacrylat. Entsprechendes gilt auch für die (Meth)acrylsäure-Derivate und (Meth)acrylamide.

Für die Ausbildung der weichen und harten Schaumbereiche in dem mit Hilfe des erfindungsgemäßen Hybridschaumsystems gebildeten Gradientschaum ist es notwendig, daß der Gewichtsanteil des Vinylestergemisches größer ist als sowohl der Gewichtsanteil des mindestens einen Polyols als auch der Gewichtsanteil des mindestens einen Polyisocyanats. Vorzugsweise beträgt das Verhältnis des Gewichtsanteils des Vinlyestergemisches zu dem Gewichtsanteil des oder der Polyole 1,01 bis 5,00:1, vorzugsweise 1,05 bis 3,00:1. Entsprechendes gilt auch für das Gewichtsverhältnis des Vinylestergemisches zu dem Gewichtsanteil des oder der Polyisocyanate, was ebenfalls vorzugsweise im Bereich von 1.01 bis 5,00:1, noch bevorzugter 1,05 bis 3,00:1 beträgt.

Vorzugsweise ist der in der Polyisocyanat-Komponente (B) enthaltene thermisch aktivierbare Radikalbildner bei einer Temperatur von 60 bis 90°C, vorzugsweise 70 bis 80°C, thermisch aktivierbar, das heißt, daß er bei dem Erreichen dieser Temperatur in der Reaktionsmischung im Verlaufe der Polyurethanbildungsreaktion dann die radikalische Polymerisation der in dem Vinylestergemisch der Polyol-Komponente (A) enthaltenen Vinylmonomeren auslöst.

Als thermisch aktivierbaren Radikalbildner verwendet man erfindungsgemäß vorzugsweise einen gegebenenfalls mit Phthalsäureester, Kreide, Kaolin, Silikonöl, einem Aliphat und/oder Weißöl phlegmatisierten Peroxidhärter. Als Peroxidhärter sind erfindungsgemäß besonders geeignet Di-(4-tert.-Butylcyclohexyl)peroxydicarbonat, Dicetylperoxydicarbonat, Dicyclohexylperoxydicarbonat, Dimyristylperoxydicarbonat, tert.-Butylperoxyneodecanoat, tert.-Amylperoxypivalat, Dilauroylperoxid, Dibenzoylperoxid, tert.-Amylperoxy-2-ethylhexanoat, tert.-Butylperoxy-2-ethylhexanoat, Disuccinoylperoxid, tert.-Amylperoxy-2-ethylhexylcarbonat, 1,1-Di-(tert.-butylperoxy)-3,3,5-trimethylcyclohexan, 1,1-Di-(tert.-butylperoxy)cyclohexan, tert.-Butylperoxyisopropylcarbonat, tert.-Butylperoxy-3,5,5-trimethylhexanoat, tert.-Butylperoxy-2-ethylhexylcarbonat, tert.-Butylperoxyacetat, tert.-Amylperoxybenzoat, tert.-Butylperoxybenzoat, 2,2-Di-(tert.-butylperoxy)-butan, Dicumylperoxid, tert.-Butylcumylperoxid, Di-(tert.-amyl)-peroxid, Di-(tert.-butyl)-peroxid, tert.-Butylhydroperoxid, Ammoniumperoxodisulfat, Natriumperoxodisulfat und Kaliumperoxodisulfat, sowie Mischungen dieser Peroxidhärter.

Gemäß einer besonders bevorzugten Ausführungsform der Erfindung enthalten die Polyol-Komponente (A) 5 bis 60 Gew.-%, vorzugsweise 10 bis 50 Gew.-% mindestens eines Polyols, 0,01 bis 10 Gew.-%, vorzugsweise 0,1 bis 5 Gew.-% Wasser als Treibmittel, 0,1 bis 50 Gew.-%, vorzugsweise 0,5 bis 40 Gew.-% mindestens eines polymerisierbaren Hydroxyvinylesters, 0,1 bis 50 Gew.-%, vorzugsweise 0,5 bis 40 Gew.-% mindestens eines trifunktionellen, polymerisierbaren Vinylesters, 0 bis 50 Gew.-%, vorzugsweise 0,5 bis 40 Gew.-% mindestens eines zusätzlichen Vinylmonomers, 0 bis 50 Gew.-%, vorzugsweise 0,5 bis 40 Gew.-% mindestens eines difunktionellen polymerisierbaren Hydroxyvinylesters 0,01 bis 10 Gew.-%, vorzugsweise 0,1 bis 5,0 Gew.-% mindestens eines Zellstabilisators und 0 bis 10 Gew.-%, vorzugsweise 0,1 bis 5 Gew.-% mindestens eines Katalysators für die Reaktion des Polyols mit dem Polyisocyanat, die Polyisocyanat-Komponente (B) 1 bis 50 Gew.-%, vorzugsweise 10 bis 40 Gew.-% mindestens eines Polyisocyanats und die Komponente. (C) 0,01 bis 10 Gew.-%, vorzugsweise 0,1 bis 5 Gew.-% mindestens eines thermisch aktivierbaren Radikalbildners für die Polymerisation der Vinylmonomeren, jeweils auf das Gesamtgewicht der Komponenten (A), (B) und (C) bezogen, wobei die Gesamtmenge dieser Bestandteile 100 Gew.-% ausmacht.

Gemäß einer weiteren bevorzugten Ausführungsform der Erfindung enthält die Polyol-Komponente (A) als Katalysator für die Reaktion des Polyols mit dem Polyisocyanat ein aromatisches und/oder aliphatisches sekundäres oder tertiäres Amin, eine metallorganische Verbindung eines Metalls aus der Zn, Sn, Mn, Mg, Bi, Sb, Pb und Ca umfassenden Gruppe, insbesondere ein Octoat, Naphthenat oder Acetylacetonat.

Weiterhin können sowohl die Polyol-Komponente (A) als auch die Polyisocyanat-Komponente (B) mindestens ein intumeszierendes Material auf der Grundlage eines Säurebildners, einer Kohlenstoff liefernden Verbindung und eines Gasbildners, Blähgraphit, ein blähfähiges Schichtsilikat und/oder ein zusätzliches organisches oder anorganisches Flammschutzmittel enthalten.

Hierbei sind als Flammschutzmittel vorzugsweise roter Phosphor, eine Phosphorverbindung, insbesondere ein halogenierter Phosphorsäureester, wie Trichlorethylphosphat, Tris(2-chlorisopropyl)-phosphat, Triphenylphosphat oder Tris(2-chlorethyl)-phosphat, ein Metallhydroxid, insbesondere Aluminiumhydroxid oder Magnesiumhydroxid, Zinkborat und Ammoniumpolyphosphat, sowie gegebenenfalls Antimonoxid als Synergist enthalten.

Erfindungsgemäß können die Polyol-Komponente (A) und/oder die Polyisocyanat-Komponente (B) zusätzlich mindestens einen anorganischen Füllstoff enthalten, wie beispielsweise ein Metalloxid, ein Borat, ein Carbonat, vorzugsweise Kreide, ein Silikat, Kaolin, Glaspulver, Eisenoxid, Titandioxid, Siliciumdioxid, einen anorganischen Schaum, vorzugsweise geschäumten Blähton, Perlite und Vermiculit, und/oder Hohlkügelchen aus silikatischem Material oder Glas.

Schließlich können die Polyol-Komponente (A) und/oder die Polyisocyanat-Komponente (B) zusätzlich an sich bekannte Hilfs- und Zusatzstoffe, Stabilisatoren, Weichmacher, Katalysatoren, Thixotropiermittel, Verdünnungs- oder Lösemittel und/oder Farbstoffe in üblichen Mengen enthalten. Als Thixotropiermittel ist dabei hydrophobe oder hydrophobierte Kieselsäure enthalten. Als Verdünnungs- oder Lösemittel sind aliphatische Alkohole, wie Butanol, bevorzugt.

Gemäß einer bevorzugten Ausführungsform der Erfindung liegt das erfindungsgemäße Hybridschaumsystem in Form eines Zweikomponenten-Polyurethan/Vinylester-Hybridschaumsystems vor, bei dem die Komponente (C) reaktionsinhibierend getrennt in der Polyol-Komponente (A) und/oder der Polyisocyanat-Komponente (B) vorliegt. Vorzugsweise sind die Polyol-Komponente (A), die Polyisocyanat-Komponente (B) und die Komponente (C) in einer Zwei- oder Mehrkammervorrichtung reaktionsinhibierend getrennt und unter Anwendungsbedingungen unter Einhaltung des NCO:OH-Verhältnisses von größer als 1:1 zur Reaktion bringbar enthalten. Eine weitere Ausführungsform der Erfindung umfaßt ein Dreikomponenten-Polyurethan/Vinylester-Hybridschaumsystem, bei dem die Polyol-Komponente (A), die Polyisocyanat-Komponente (B) und das Vinylestergemisch in getrennten Kammern eines Dreikammersystems vorliegen, wobei die Komponente (C), das heißt der Katalysator für die Polymerisation des Vinylmonomeren, entweder in der Polyol-Komponente (A) oder in der Polyisocyanat-Komponente (B) enthalten sein kann.

Die Erfindung betrifft weiterhin die Verwendung des erfindungsgemäßen Mehrkomponenten-Polyurethan/Vinylester-Hybridschaumsystems zum Beschichten von Oberflächen und zum Ausschäumen von Öffnungen, Kabel- und Rohrdurchführungen in Wänden, Böden und/oder Decken von Gebäuden zum Zwecke des Schallschutzes und/oder des Brandschutzes.

Die folgenden Beispiele dienen der weiteren Erläuterung der Erfindung.

### BEISPIEL 1

Polyurethan/Vinylester-Hybridschaumsystem mit relativ kleiner Weichschaumdomäne

Man bereitet ein Zweikomponenten-Polyurethan/Vinylester-Hybridschaumsystem aus den folgenden Bestandteilen:
**Polyol-Komponente (A):**
(1) Polyol: 29,6 Gew.-% Polyethylenglykol (Pluriol E 600)
(2) Treibmittel: 0,6 Gew.-% Wasser
(3) Zellstabilisator: 1,0 Gew.-% eines Siliconcopolymers (DABCO DC 193)
(4) Katalysator für die Polyurethanreaktion: 0,6 Gew.-% einer Mischung aus 70% Bis(2-dimethylaminoethyl)ether und 30% Dipropylengylkol (Jeffcat ZF-22)
(5) Vinylester: 3,0 Gew.-% Hydroxypropylmethacrylat (Bisomer HPMA)
(6) Vinylester: 14,8 Gew.-% ethoxyliertes (2 EO) Bisphenol-A-dimethacrylat (SR 348L)
(7) Vinylester: 23,0 Gew.-% Trimethylolpropantrimethacrylat (Bisomer TMPTMA)
**Polyisocyanat-Komponente (B):**
(8) Polyisocyanat: 26,6 Gew.-% eines Prepolymers auf Basis 4,4'-Methylenbis(phenylisocyanat) (Voranate M 220)
**Komponente (C):**
(9) thermisch aktivierbarer Radikalbildner: 1,0 Gew.-% mit Phthalat phlegmatisiertes Dibenzoylperoxid (BP-50-FT)

Man vermischt für die Herstellung der Polyol-Komponente (A) die Bestandteile (1) bis (7) und die Bestandteile (8) und (9) zur Bildung der die Komponente (C) enthaltenden Polyisocyanat-Komponente (B).

Diese Komponenten können unmittelbar zur Reaktion gebracht werden oder aber auch in einer Zweilcammervorrichtung reaktionsinhibierend voneinander getrennt in verschiedenen Kammern vorliegend aufbewahrt werden.

Für die Herstellung des Hybridschaums werden die Polyol-Komponente (A) und die Polyisocyanat-Komponente (B) mit der obigen Zusammensetzung innig miteinander vermischt, worauf durch die Reaktion des Polyols mit dem Polyisocyanat eine exotherme Polyurethanbildung einsetzt. Beim Erreichen einer Temperatur von etwa 70°C wird der thermisch aktivierbare Radikalbildner aktiviert und initiiert in diesem Bereich die Härtung der Vinylesterbestandteile. Dabei fungiert das Hydroxypropylmethylacrylat als Verknüpfungsstelle zwischen den beiden polymeren Netzwerken, indem die Hydroxyfunktion dieses Vinylmonomeren in das Polyurethanharz eingebaut wird, während die Doppelbindung dieses Vinylmonomeren an der radikalischen Polymerisation des Vinyl-estergemisches teilnimmt. In dieser Weise wird ein Hybridschaum mit einem von innen nach außen abnehmenden Härtegradienten gebildet, d.h. ein Schaum mit hartem Kern und weichem Außenbereich.

### BEISPIEL 2

Hybridschaumsystem für die Herstellung eines Hybridschaums mit relativ großer Weichschaumdomäne
**Polyol-Komponente (A):**
(1) Polyol: 24,7 Gew.-% Polyethylenglykol (Pluriol E 600)
(2) Treibmittel: 0,5 Gew.-% Wasser
(3) Zellstabilisator: 0,8 Gew.-% eines Siliconcopolymers (DABCO DC 193)
(4) Katalysator für die Polyurethanreaktion: 0,5 Gew.-% einer Mischung aus 70% Bis(2-dimethylaminoethyl)ether und 30% Dipropylengylkol (Jeffcat ZF-22)
(5) Vinylester: 2,5 Gew.-% Hydroxypropylmethacrylat (Bisomer HPMA)
(6) Vinylester: 28,8 Gew.-% ethoxyliertes (2 EO) Bisphenol-A-dimethacrylat (SR 348L)
(7) Vinylester: 19,2 Gew.-% Trimethylorpropantrimethacrylat (Bisomer TMPTMA)
**Polyisocyanat-Komponente (B):**
(8) Polyisocyanat: 22,2 Gew.-% eines Prepolymers auf Basis 4,4'-Methylenbis(phenylisocyanat) (Voranate M 220)
**Komponente (C):**
(9) thermisch aktivierbarer Radikalbildner: 0,8 Gew.-% mit Phthalat phlegmatisiertes Dibenzoylperoxid (BP-50-FT)

Man bereitet ein Zweikomponenten-Hybridschaumsystem nach der in Beispiel 1 angegebenen Verfahrensweise.

Beim bestimmungsgemäßen Aufschäumen und Aushärten durch das Vermischen der Polyol-Komponente (A) mit der die Komponente (C) enthaltende Polyisocyanat-Komponente (B) ergibt sich ein Hybridschaum mit relativ großer Weichschaumdomäne.

### BEISPIEL 3

Der mit Hilfe des Hybridschaumsystems des Beispiels 1 hergestellte Hybridschaum wurde bezüglich seiner Schallschutzeigenschaften und mechanischen Eigenschaften einem herkömmlichen Polyurethan-Hartschaum beziehungsweise herkömmlichen Polyurethan-Weichschaum gegenübergestellt.

Hierzu wurde einerseits das Körperschall-Verbesserungsmaß eines typischen Polyurethan-Hartschaums und des erfindungsgemäß erhaltenen Hybridschaums bei einer Frequenz von 500 Hz gemessen. Die hierbei erhaltenen Werte sind in der nachfolgenden Tabelle aufgeführt, wobei die Körperschall-Entkupplung um so besser ist, je höher das Körperschall-Verbesserungsmaß.

| **Schaumtyp** | **Körperschall-Verbesserungsmaß KS-VM [dB]** |
|---|---|
| Polyurethan-Hartschaum | 29,7 |
| Polyurethan-Weichschaum | 57,0 |
| erfindungsgemäßer Hybridschaum | 48,2 |

Zur Bestimmung der mechanischen Eigenschaften wurde die Druckfestigkeit eines typischen Polyurethan-Weichschaums und des erfindungsgemäßen Hybridschaums gemessen und zwar bei 10% Stauchung unter Verwendung eines aus den Schäumen mit Hilfe einer Lochsäge herausgearbeiteten zylindrischen Prüfkörpers mit einem Durchmesser von 27 mm und einer Höhe von 33 mm. Die hierbei erhaltenen Druckfestigkeitswerte sind in der nachfolgenden Tabelle aufgeführt.

| **Schaumtyp** | **Druckfestigkeit [N mm⁻²]** |
|---|---|
| Polyurethan-Hartschaum | 0,150 |
| Polyurethan-Weichschaum | 0,008 |
| erfindungsgemäßer Hybridschaum | 0,045 |

Aus den obigen Tabellen ist zu erkennen, daß das erfindungsgemäße Hybridschaumsystem einen Hybridschaum ergibt, der einem Hartschaum im Hinblick auf seine Schallschutzeigenschaften deutlich überlegen ist und einem Weichschaum in seinen mechanischen Eigenschaften, nämlich seiner Druckfestigkeit.

Damit eignet sich das erfindungsgemäße Hybridschaumsystem ausgezeichnet als Material zum Beschichten von Oberflächen und zum Ausschäumen von Öffnungen in Wänden, Böden und/oder Decken von Gebäuden zum Zwecke des Schallschutzes und des Brandschutzes.

## Patentansprüche

1. Mehrkomponenten-Polyurethan/Vinylester-Hybridschaumsystem zur Bildung eines Gradientschaums mit weichen und harten Schaumbereichen, mit einer Polyol-Komponente (A), die mindestens ein Polyol mit einer OH-Funktionalität von mindestens 2, einen Katalysator für die Reaktion des Polyols mit dem Polyisocyanat, mindesten ein polymerisierbares Vinylmonomer, Wasser oder ein Treibmittel auf der Grundlage eines verdichteten oder verflüssigten Gases als Schaumbildner enthält, einer Polyisocyanat-Komponente (B), die mindestens ein Polyisocyanat mit einer NCO-Funktionalliät von mindestens 2 enthält, und einer Komponente (C), die einen Katalysator für die Polymerisation des Vinylmonomers enthält, wobei die Komponenten (A) bis (C) reaktionsinhibierend voneinander getrennt vorliegen und erst beim Vermischen unter Polykondensation und Polymerisation reagieren, **dadurch gekennzeichnet, daß** die Polyol-Komponente (A) als Vinylmonomer ein Vinylestergemisch aus mindestens einem polymerisierbaren Hydroxyvinylester und mindestens einem verzweigten, mindestens trifunktionellen, polymerisierbaren Vinylester und die Polyisocyanat-Komponente (B) einen thermisch aktivierbaren Radikalbildner als Katalysator für die Polymerisation der Vinylmonomeren enthält, mit der Maßgabe, das der Gewichtsanteil des Vinylestergemischs größer ist als sowohl der Gewichtsanteil des mindestens einen Polyols als auch der Gewichtsanteil des mindestens einen Polyisocyanats.

2. Mehrkomponenten-Polyurethan/Vinylester-Hybridschaumsystem nach Anspruch 1, **dadurch gekennzeichnet, daß** das Vinylestergemisch als Hydroxyvinylester 2-Hydroxyethyl(meth)acrylat und/oder 2-Hydroxypropyl-(meth)acrylat und als verzweigten, mindestens trifunktionellen Vinylester Trimethylolpropan-tri(meth)acrylat und/oder ein trifunktionelles oder höherfunktionelles Vinylesterurethanharz enthält.

3. Mehrkomponenten-Polyurethan/Vinylester-Hybridschaumsystem nach Anspruch 1 oder 2, **dadurch gekennzeichnet, daß** das Gewichtsverhältnis von polymerislerbarem Hydroxyvinylester zu verzweigtem, mindestens trifunktionellen, polymerisierbaren Vinylester in dem Vinylestergemisch im Bereich von 1:10 bis 10:1, vorzugsweise von 2:5 bis 5:1 1 liegt.

4. Mehrkomponenten-Polyurethan/Vinylester-Hybridschaumsystem nach Anspruch 1 oder 2, **dadurch gekennzeichnet, daß** das Vinylestergemisch zusätzlich mindestens einen difunktionellen, polymerisierbaren Hydroxyvinylester aus der 1.4-Butandiolmethacrylat, ethoxyliertes 2-Bisphenol-A-dimethacrylat und Hydroxyvinylester der folgenden allgemeinen Formel (1): 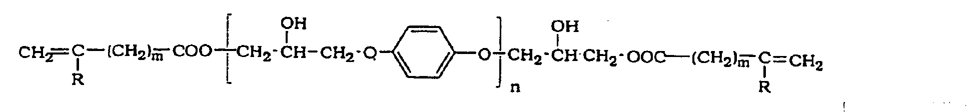 in der R Wasserstoff oder eine C₁-C₄-Alkylgruppe, m Null oder eine ganze Zahl mit einem Wert von 1 bis 4 und n 1 oder 2 bedeuten, umfassenden Gruppe enthält.

5. Mehrkomponenten-Polyurethan/Vinylester-Hybridschaumsystem nach den Ansprüchen 1 bis 4. **dadurch gekennzeichnet, daß** das Vinylestergemisch der Polyol-Komponente (A) als zusätzliches Vinylmonomer mindestens einen Vertreter der Alkyl(meth)acrylate, Aryl(meth)acrylate, Hydroxyalkyl(meth)acrylate, (Meth)acrylamide, Ether(meth)acrylate, mehrfunktionelle vernetzende (Meth)acrylate, Vinylesterurethanharze, alkoxylierte Bisphenol-A-di(meth)acrylate, alkoxylierte Bisphenol-F-di(meth)acrylate, (Meth)acrylsäure. (Meth)acrylsäureanhydrid und (Meth)acrylnitril umfassenden Gruppe enthält.

6. Mehrkomponenten-Polyurethan/Vinylester-Hybridschaumsystem nach Anspruch 5, **dadurch gekennzeichnet, daß** das Vinylestergemisch der Polyol-Komponente (A) als zusätzliches Vinylmonomer mindestens einen Vertreter der Methyl(meth)acrylat, Ethyl(meth)acrylat, n-Butyl(meth)acrylat, Isobutyl(meth)acrylat, n-Hexyl(meth)acrylat, 2-Ethylhexyl(meth)-acrylat, Isodecyl(meth)acrylat, (Meth)acrylsäureester 13,0, (Meth)acrylsäureester 17.4, Cyclohexyl(meth)acrylat, lsobornyl(meth)acrylat, Benzyl(meth)acrylät. 3,3,5-Trimethylcyclohexyl(meth)acrylat, Isotridecyl(meth)acrylat, Stearyl(meth)acrylat, 2-Hydroxyethyl(meth)acrylat, Hydroxypropyl(meth)acrylat, 2-Dimethylaminoethylmethacrylat, 3-Dimethylaminopropyl(meth)acrylamid, 2-Trimethylammoniumethyl(meth)acrylatchlorid, 3-Trimethylammoniumpropyl(meth)acrylamidchlorid. 2-tert.-Butylaminoethyl(meth)acrylat, (Meth)acrylamid, N-Methylol(meth)acrylamid, N-Butoxymethyl(meth)acrylamid, Ethyltriglykol(meth)acrylat, Tetrahydrofurfuryl(meth)acrylat, Methoxypolyethylenglykol-350-(meth)-acrylat, Methoxypolyethylenglykol-500-(meth-acrylat, Methoxypolyethylenglykol-750-(meth)acrylat, Methoxypolyethylenglykol-1000-(meth)acrylat, (Meth)-acrylsäureester ethoxylierter (25 mol EO) C₁₆-C₁₈-Fettalkoholgemische, Butyldlglykol(meth)acrylat, Allyl(meth)acrylat, Ethylenglykoldi(meth)acrylat, Diethylenglykoldi(meth)acrylat, Triethylenglykoldi(meth)-acrylat, Tetraethylenglykoldi(meth)acrylat, Polyethylenglykol-200-di(meth)acrylat, Polyethylenglykol-400-di(meth)acrylat, Polyethylenglykol-600-di(meth)acrylat, Polyethylenglykol-1000-di(meth)acrylat, 1,3-Butandioldi(meth)-acrylat, 1.4-Butandioldi(meth)-acrylat, 1,6-Hexandioldi(meth)acrylat, 1,12-Dodecanidioldi(meth)acrylat, Glycerindi(meth)acrylat, Trimethylolpropantri(meth)-acrylat, Diurethandi-(meth)acrylat, Umsetzungsprodukte aus polyfunktionellem Isocyanat, gegebenenfalls mehrwertigem Alkohol und/oder gegebenenfalls mehrwertigem Amin und einem Hydroxylalkyl-(meth)acrylat), ethoxyliertes (2 EO) Bisphenol-A-di(meth)acrylat, ethoxyliertes (10 EO) Bisphenol-A-di(meth)acrylat, (Meth)acrylsäure, (Meth)acrylsäureanhydrid. Maleinsäure-mono-2-(meth)acryloyloxyethylester, N-(2-(Meth)acryloyloxyethyl)-ethylenharnstoff, N-(2-(Meth)acryloyloxyethyl)-ethylenharnstoff, Ethylencyanhydrin und Acetoncyanhydrin umfassenden Gruppe enthält.

7. Mehrkomponenten-Polyurethan/Vinylester-Hybridschaumsystem nach den Ansprüchen 1 bis 6, **dadurch gekennzeichnet, daß** das Verhältnis des Gewichtsanteils des Vinylestergemischs zu dem Gewichtsanteil des mindestens einen Polyols als auch dem Gewichtsanteil des mindestens einen Polyisocyanats 1.01 bis 5.00 zu 1, vorzugsweise 1,05 bis 3,00 zu 1 beträgt.

8. Mehrkomponenten-Polyurethan/Vinylester-Hybridschaumsystem nach den Ansprüchen 1 bis 7, **dadurch gekennzeichnet, daß** der Radikalbildner bei einer Temperatur von 60°C bis 90°C thermisch aktivierbar ist.

9. Mehrkomponenten-Polyurethan/Vinylester-Hybridschaumsystem nach den Anspruch 8, **dadurch gekennzeichnet, daß** es als thermisch aktivierbaren Radikalbildner für die Polymerisation der Vinylmonomeren einen gegebenenfalls mit Phthalsäureester, Kreide, Kaolin, Silikonöl, Aliphaten und/oder Weißöl phlegmatisierten Peroxidhärter enthält.

10. Mehrkomponenten-Polyurethan/Vinylester-Hybridschaumsystem nach Anspruch 9. **dadurch gekennzeichnet, daß** es als Peroxidhärter mindesten einen Vertreter der Di-(4-tert.-Butylcyclohexyl)peroxydicarbonat, Dicetylperoxydicarbonat, Dicyclohexylperoxydicarbonat, Dimyristylperoxydicarbonat, tert.-Butylperoxyneodecanoat, tert.-Amylperoxypivalat, Dilauroylperoxid, Dibenzoylperoxid, tert.-Amylperoxy-2-ethylhexanoat, tert.-Butylperoxy-2-ethylhexanoat, Disuccinoylperoxid, tert.-Amylperoxy-2-ethylhexylcarbonat, 1,1-Di-(tert.-butylperoxy)-3,3,5-trimethylcyclohexan, 1.1-Di-(tert.-butylperoxy)cyclohexan, tert.-Butylperoxyisopropylcarbonat, tert.-Butylperoxy-3,5,5-trimethylhexanoat. tert.-Butylperoxy-2-ethylhexylcarbonat, tert.-Butylperoxyacetat, tert.-Amylperoxybenzoat, tert.-Butylperoxybenzoat, 2.2-Di-(tert.-butylperoxy)-butan, Dicumylperoxid, tert.-Butylcumylperoxid, Di-(tert.-amyl)-peroxid, Di-(tert.-butyl)-peroxid, tert.-Butylhydroperoxid, Ammoniumperoxodisulfat. Natriumperoxodisulfat und Kaliumperoxodisulfat umfassenden Gruppe enthält.

11. Mehrkomponenten-Polyurethan/Vinylester-Hybridschaumsystem nach mindestens einem der vorhergehenden Ansprüche, **dadurch gekennzeichnet, daß** die Polyol-Komponente (A) 5 bis 60 Gew.-%, vorzugsweise 10 bis 50 Gew.-% mindestens eines Polyols, 0.01 bis 10 Gew.-%, vorzugsweise 0,1 bis 5 Gew.-% Wasser als Treibmittel, 0.1 bis 50 Gew.-%, vorzugsweise 0,5 bis 40 Gew.-% mindestens eines polymerisierbaren Hydroxyvinylesters, 0,1 bis 50 Gew.-%, vorzugsweise 0.5 bis 40 Gew.-% mindestens eines trifunktionellen, polymerisierbaren Vinylesters, 0 bis 50 Gew.-%, vorzugsweise 0,5 bis 40 Ges.-% mindestens eines zusätzlichen Vinylmonomers, 0 bis 50 Gew.-%, vorzugsweise 0.5 bis 40 Gew.-% mindestens eines difunktionellen polymerisierbaren Hydroxyvinylesters 0.01 bis 10 Gew.-%, vorzugsweise 0,1 bis 5,0 Gew.-% mindestens eines Zellstabilisators und 0 bis 10 Gew.-%, vorzugsweise 0,1 bis 5 Gew.-% mindestens eines Katalysators für die Reaktion des Polyols mit dem Polyisocyanat, die Polyisocyanat-Komponente (B) 1 bis 50 Gew.-%, vorzugsweise 10 bis 40 Gew.-% mindestens eines Polyisocyanats und die Komponente (C) 0,01 bis 10 Gew.-%, vorzugsweise 0,1 bis 5 Gew.-% mindestens eines thermisch aktivierbaren Radikalbildners für die Polymerisation der Vinylmonomeren, jeweils auf das Gesamtgewicht der Komponenten (A), (B) und (C) bezogen, enthalten, wobei die Gesamtmenge dieser Bestandteile 100 Ges.-% ausmacht.

12. Mehrkomponenten-Polyurethan/Vinylester-Hybridschaumsystem nach mindestens einem der vorhergehenden Ansprüche, **dadurch gekennzeichnet, daß** die Polyol-Komponente (A) als Katalysator für die Reaktion des Polyols mit dem Polyisocyanat ein aromatisches und/oder aliphatisches sekundäres oder tertiäres Amin, eine metallorganische Verbindung eines Metalls aus der Zn, Sn, Mn, Mg, Bi, Sb, Pb und Ca umfassenden Gruppe, insbesondere ein Octoat, Naph-thenat oder Acetylacetonat enthält.

13. Mehrkomponenten-Polyurethan/Vinylester-Hybridschaumsystem nach mindestens einem der vorhergehenden Ansprüche, **dadurch gekennzeichnet, daß** die Polyol-Komponente (A) und/oder die Polyisocyanat-Komponente (B) mindestens ein intumeszierendes Material auf der Grundlage eines Säurebildners, einer Kohlenstoff liefernden Verbindung und eines Gasbildners, Blähgraphit, ein blähfähiges Schichtsilikat und/oder ein zusätzliches organisches oder anorganisches Flammschutzmittel enthält.

14. Mehrkomponenten-Polyurethan/Vinylester-Hybridschaumsystem nach Anspruch 13, **dadurch gekennzeichnet, daß** als Flammschutzmittel roter Phosphor, eine Phosphorverbindung, insbesondere ein halogenierter Phosphorsäureester, wie Trichlorethylphosphat, Tris(2-chlorisopropyl)-phosphat, Triphenylphosphat oder Tris(2-chlorethyl)-phosphat, ein Metallhydroxid, insbesondere Aluminiumhydroxid oder Magnesiumhydroxid, Zinkborat und Ammoniumpolyphosphat, sowie gegebenenfalls Antimonoxid als Synergist enthalten ist.

15. Mehrkomponenten-Polyurethan/Vinylester-Hybridschaumsystem nach mindestens einem der vorhergehenden Ansprüche, **dadurch gekennzeichnet, daß** die Polyol-Komponente (A) und/oder die Polyisocyanat-Komponente (B) zusätzlich mindestens einen anorganischen Füllstoff enthält.

16. Mehrkomponenten-Polyurethan/Vinylester-Hybridschaumsystem nach Anspruch 15, **dadurch gekennzeichnet, daß** es als anorganischen Füllstoff ein Metalloxid, ein Borat, ein Carbonat, vorzugsweise Kreide, ein Silikat, Kaolin, Glaspulver, Eisenoxid, Titandioxid, Siliciumdioxid, einen anorganischen Schaum, vorzugsweise geschäumten Blähton, Perlite und Vermiculit, und/oder Hohlkügelchen aus silikatischem Material oder Glas enthält.

17. Mehrkomponenten-Polyurethan/Vinylester-Hybridschaumsystem nach mindestens einem der vorhergehenden Ansprüche, **dadurch gekennzeichnet, daß** die Polyol-Komponente (A) und/oder die Polyisocyanat-Komponente (B) zusätzlich an sich bekannte Hilfs- und Zusatzstoffe, Stabilisatoren, Weichmacher, Katalysatoren. Thixotropiermittel, Verdünnungs- oder Lösemittel und/oder Farbstoffe in üblichen Mengen enthält.

18. Mehrkomponenten-Polyurethan/Vinylester-Hybridschaumsystem nach Anspruch 17. **dadurch gekennzeichnet, daß** als Thixotropiermittel hydrophobe oder hydrophobierte Kieselsäure enthalten ist.

19. Mehrkomponenten-Polyurethan/Vinylester-Hybridschaumsystem nach Anspruch 18, **dadurch gekennzeichnet, daß** als Verdünnungs- oder Lösemittel ein aliphatischer Alkohol, wie Butanol, enthalten ist.

20. Mehrkomponenten-Polyurethan/Vinylester-Hybridschaumsystem nach mindestens einem der vorhergehenden Ansprüche, **gekennzeichnet durch,** ein Zweikomponenten-Polyurethan/Vinylester-Hybridschaumsystem bei dem die Komponente (C) reaktionsinhibierend getrennt in der Polyol-Komponente (A) und/oder der Polyisocyanat-Komponente (B) vorliegt.

21. Mehrkomponenten-Polyurethan/Vinylester-Hybridschaumsystem nach mindestens einem der vorhergehenden Ansprüche, **dadurch gekennzeichnet, daß** die Polyol-Komponente (A), die Polyisocyanat-Komponente (B) und die Komponente (C) in einer Zwei- oder Mehrkammervorrichtung reaktionsinhibierend voneinander getrennt und unter Anwendungsbedingungen unter Einhaltung des NCO:OH-Verhältnisses von größer als 1:1 zur Reaktion bringbar enthalten sind.

22. Verwendung des Mehrkomponenten-Polyurethan/Vinylester-Hybridschaumsystems nach mindestens einem der vorhergehenden Ansprüche als Material zum Beschichten von Oberflächen und zum Ausschäumen von Öffnungen, Kabel- und Rohrdurchführungen in Wänden, Böden und/oder Decken von Gebäuden zum Zwecke des Schallschutzes und/oder Brandschutzes.

## Claims

1. Multiple-component polyurethane/vinyl ester hybrid foam system for producing a gradient foam with soft and hard foam regions, with: a polyol component (A) containing at least one polyol with an OH functionality of at least 2, a catalyst for the reaction of the polyol with the polyisocyanate, at least one polymerizable vinyl monomer, [and] water or a gas-developing agent based on a compressed or liquefied gas as the foaming agent; a polyisocyanate component (B) containing at least one polyisocyanate with an NCO functionality of at least 2; and a component (C) containing a catalyst for the polymerization of the vinyl monomer; wherein the components (A) to (C) are presented separately from each other in a reaction-inhibiting fashion so that only upon being mixed do they react with polycondensation and polymerization, **characterized in that** the polyol component (A) contains as vinyl monomer a vinyl ester mixture of at least one polymerizable hydroxyvinyl ester and at least one branched, at least trifunctional, polymerizable vinyl ester, and the polyisocyanate component (B) contains a heat-activatable radical former as catalyst for the polymerization of the vinyl monomers, with the proviso that the proportion by weight of the vinyl ester mixture is greater than both the proportion by weight of the at least one polyol and the proportion by weight of the at least one polyisocyanate.

2. Multiple-component polyurethane/vinyl ester hybrid foam system according to Claim 1, **characterized in that** the vinyl ester mixture contains 2-hydroxyethyl(meth)acrylate and/or 2-hydroxypropyl(meth)acrylate as hydroxyvinyl ester, and trimethylolpropanetri(meth)acrylate and/or a trifunctional or higher-functional vinyl ester urethane resin as the branched, at least trifunctional vinyl ester.

3. Multiple-component polyurethane/vinyl ester hybrid foam system according to Claim 1 or Claim 2, **characterized in that** the proportion by weight of polymerizable hydroxyvinyl ester to branched, at least trifunctional, polymerizable vinyl ester in the vinyl ester mixture lies in the range of from 1:10 to 10:1, preferably from 2:5 to 5:1.

4. Multiple-component polyurethane/vinyl ester hybrid foam system according to Claim 1 or Claim 2, **characterized in that** the vinyl ester mixture additionally contains at least one difunctional polymerizable hydroxyvinyl ester from the group comprising 1,4-butanediolmethacrylate, ethoxylated 2-bisphenol-A-dimethacrylate and hydroxyvinyl esters of the following general formula (I): 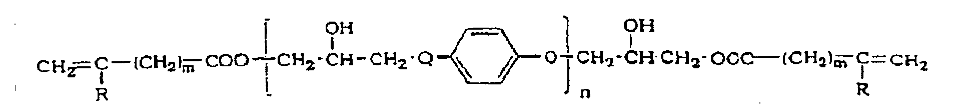 in which R stands for hydrogen or a C1-C4 alkyl group, m stands for zero or a whole number with a value of 1 to 4, and n stands for 1 or 2.

5. Multiple-component polyurethane/vinyl ester hybrid foam system according to Claims 1 to 4, **characterized in that** the vinyl ester mixture of the polyol component (A) contains as additional vinyl monomer at least one representative of the group comprising alkyl(meth)acrylates, aryl(meth)acrylates, hydroxyalkyl(meth)acrylates, (meth)acrylamides, ether(meth)acrylates, multifunctional crosslinking (meth)acrylates, vinyl ester urethane resins, alkoxylated bisphenol-A-di(meth)acrylates, alkoxylated bisphenol-F-di(meth)acrylates, (meth)acrylic acid, (meth)acrylic acid anhydride and (meth)acrylonitrile.

6. Multiple-component polyurethane/vinyl ester hybrid foam system according to Claim 5, **characterized in that** the vinyl ester mixture of the polyol component (A) contains as additional vinyl monomer at least one representative of the group comprising methyl(meth)acrylate, ethyl(meth)acrylate, n-butyl(meth)acrylate, isobutyl(meth)acrylate, n-hexyl(meth)acrylate, 2-ethylhexyl(meth)acrylate, isodecyl(meth)acrylate, (meth)acrylic acid ester 13,0, (meth)acrylic acid ester 17,4, cyclohexyl(meth)acrylate, isobornyl(meth)acrylate, benzyl(meth)acrylate, 3,3,5-trimethylcyclohexyl(meth)acrylate, isotridecyl(meth)acrylate, stearyl(meth)acrylate, 2-hydroxyethyl(meth)acrylate, hydroxypropyl(meth)acrylate, 2-dimethylaminoethylmethacrylate, 3-dimethylaminopropyl(meth)acrylamide, 2-trimethylammoniumethyl(meth)acrylate chloride, 3-trimethylammoniumpropyl(meth)acrylamide chloride, 2-tert.-butylaminoethyl(meth)acrylate, (meth)acrylamide, N-methylol(meth)acrylamide, N-butoxymethyl(meth)acrylamide, ethyltriglycol(meth)acrylate, tetrahydrofurfuryl(meth)acrylate, methoxypolyethyleneglycol-350-(meth)acrylate, methoxypolyethyleneglycol-500-(meth)acrylate, methoxypolyethyleneglycol-750-(meth)acrylate, methoxypolyethyleneglycol-1000-(meth)acrylate, (meth)acrylic acid esters of ethoxylated (25 mol EO) C16-C18 fatty alcohol mixtures, butyl diglycol(meth)acrylate, allyl(meth)acrylate, ethylene glycol di(meth)acrylate, diethylene glycol di(meth)acrylate, triethylene glycol di(meth)acrylate, tetraethylene glycol di(meth)acrylate, polyethylene glycol-200-di(meth)acrylate, polyethylene glycol-400-di(meth)acrylate, polyethylene glycol-600-di(meth)acrylate, polyethylene glycol-1000-di(meth)acrylate, 1,3-butanedioldi(meth)acrylate, 1,4-butanedioldi(meth)acrylate, 1,6-hexanedioldi(meth)acrylate, 1,12-dodecanedioldi(meth)acrylate, glycerindi(meth)acrylate, trimethylolpropanetri(meth)acrylate, diurethanedi(meth)acrylate, reaction products from polyfunctional isocyanate, optionally from polyvalent alcohol and/or optionally from polyvalent amine and a hydroxylalkyl-(meth)acrylate, ethoxylated (2 EO) bisphenol-A-di(meth)acrylate, ethoxylated (10 EO) bisphenol-A-di(meth)acrylate, (meth)acrylic acid, (meth)acrylic acid anhydride, maleic acid-mono-2-(meth)acryloyloxyethyl ester, N-(2-(meth)acryloyloxyethyl)-ethylene urea, N-(2-(meth)acryloyloxyethyl)-ethylene urea,* ethylene cyanhydrin and acetone cyanhydrin.

7. Multiple-component polyurethane/vinyl ester hybrid foam system according to Claims 1 to 6, **characterized in that** the ratio of the proportion by weight of the vinyl ester mixture to the proportion by weight of the at least one polyol and the proportion by weight of the at least one polyisocyanate is 1.01 to 5.00 to 1, preferably 1.05 to 3.00 to 1.

8. Multiple-component polyurethane/vinyl ester hybrid foam system according to Claims 1 to 7, **characterized in that** the radical former is heat-activatable at a temperature of 60°C to 90°C.

9. Multiple-component polyurethane/vinyl ester hybrid foam system according to Claim 8, **characterized in that** it contains a peroxide hardener optionally phlegmatized with phthalic acid ester, chalk, kaolin, silicone oil, aliphatics and/or white oil as the heat-activatable radical former for the polymerization of the vinyl monomers.

10. Multiple-component polyurethane/vinyl ester hybrid foam system according to Claim 9, **characterized in that** it contains as peroxide hardener at least one representative of the group comprising di-(4-tert.-butylcyclohexyl)peroxydicarbonate, dicetylperoxydicarbonate, dicyclohexylperoxydicarbonate, dimyristylperoxydicarbonate, tert.-butylperoxyneodecanoate, tert.-amylperoxypivalate, dilauroylperoxide, dibenzoylperoxide, tert.-amylperoxy-2-ethylhexanoate, tert.-butylperoxy-2-ethylhexanoate, disuccinoylperoxide, tert.-amylperoxy-2-ethylhexylcarbonate, 1,1-di-(tert.-butylperoxy)-3,3,5-trimethylcyclohexane, 1,1-di-(tert.-butylperoxy)cyclohexane, tert.-butylperoxyisopropylcarbonate, tert.-butylperoxy-3,5,5-trimethylhexanoate, tert.-butylperoxy-2-ethylhexylcarbonate, tert.-butylperoxyacetate, tert.-amylperoxybenzoate, tert.-butylperoxybenzoate, 2,2-di-(tert.-butylperoxy)-butane, dicumylperoxide, tert.-butylcumylperoxide, di-(tert.-amyl)-peroxide, di-(tert.-butyl)-peroxide, tert.-butylhydroperoxide, ammonium peroxodisulphate, sodium peroxodisulphate and potassium peroxodisulphate.

11. Multiple-component polyurethane/vinyl ester hybrid foam system according to at least one of the preceding claims, **characterized in that** the polyol component (A) contains 5 to 60 % by weight, preferably 10 to 50 % by weight, of at least one polyol, 0.01 to 10 % by weight, preferably 0.1 to 5 % by weight, of water as expanding agent, 0.1 to 50 % by weight, preferably 0.5 to 40 % by weight, of at least one polymerizable hydroxyvinyl ester, 0.1 to 50 % by weight, preferably 0.5 to 40 % by weight, of at least one trifunctional, polymerizable vinyl ester, 0 to 50 % by weight, preferably 0.5 to 40 % by weight, of at least one additional vinyl monomer, 0 to 50 % by weight, preferably 0.5 to 40 % by weight, of at least one difunctional polymerizable hydroxyvinyl ester, 0.01 to 10 % by weight, preferably 0.1 to 5.0 % by weight, of at least one cell stabilizer, and 0 to 10 % by weight, preferably 0.1 to 5 % by weight, of at least one catalyst for the reaction of the polyol with the polyisocyanate; the polyisocyanate component (B) contains 1 to 50 % by weight, preferably 10 to 40 % by weight, of at least one polyisocyanate; and component (C) contains 0.01 to 10 % by weight, preferably 0.1 to 5 % by weight, of at least one heat-activatable radical former for the polymerization of the vinyl monomer; in each case in terms of the total weight of the components (A), (B) and (C), with the amounts of these constituents totalling 100% by weight.

12. Multiple-component polyurethane/vinyl ester hybrid foam system according to at least one of the preceding claims, **characterized in that** the polyol component (A) contains an aromatic and/or aliphatic secondary or tertiary amine [or] an organometallic compound of a metal from the group comprising zinc, tin, manganese, magnesium, bismuth, antimony, lead and calcium, in particular an octoate, naphthenate or acetyl acetonate, as catalyst for the reaction of the polyol with the polyisocyanate.

13. Multiple-component polyurethane/vinyl ester hybrid foam system according to at least one of the preceding claims, **characterized in that** the polyol component (A) and/or the polyisocyanate component (B) contain(s) at least one intumescent material based on an acid former, a carbon-yielding compound and a gas former, expandable graphite, an expandable phyllosilicate and/or an additional organic or inorganic flame retardant.

14. Multiple-component polyurethane/vinyl ester hybrid foam system according to Claim 13, **characterized in that** red phosphorus, a phosphorus compound, in particular a halogenated phosphoric acid ester, such as trichloroethyl phosphate, tris(2-chloroisopropyl)-phosphate, triphenyl phosphate or tris(2-chloroethyl)-phosphate, a metal hydroxide, in particular aluminium hydroxide or magnesium hydroxide, [or] zinc borate [or] aluminium polyphosphate is contained as flame retardant, optionally with antimony oxide as synergist.

15. Multiple-component polyurethane/vinyl ester hybrid foam system according to at least one of the preceding claims, **characterized in that** the polyol component (A) and/or the polyisocyanate component (B) additionally contain(s) at least one inorganic filler material.

16. Multiple-component polyurethane/vinyl ester hybrid foam system according to Claim 15, **characterized in that** it contains a metal oxide, a borate, a carbonate, preferably chalk, a silicate, kaolin, powdered glass, iron oxide, titanium dioxide, silicon dioxide, an inorganic foam, preferably foamed expanded clay, perlite and vermiculite, and/or hollow beads of silicious material or glass, as inorganic filler material.

17. Multiple-component polyurethane/vinyl ester hybrid foam system according to at least one of the preceding claims, **characterized in that** the polyol component (A) and/or the polyisocyanate component (B) additionally contain(s) auxiliary and additive substances, stabilizers, plasticizers, catalysts, thixotropic agents, thinners or solvents and/or colorants, known in themselves, in usual amounts.

18. Multiple-component polyurethane/vinyl ester hybrid foam system according to Claim 17, **characterized in that** hydrophobic or hydrophobized salicylic acid is contained as thixotropic agent.

19. Multiple-component polyurethane/vinyl ester hybrid foam system according to Claim 18, **characterized in that** an aliphatic alcohol such as butanol is contained as thinner or solvent.

20. Multiple-component polyurethane/vinyl ester hybrid foam system according to at least one of the preceding claims, **characterized by** a two-component polyurethane/vinyl ester hybrid foam system in which the component (C) is presented separately in a reaction-inhibiting fashion in the polyol component (A) and/or the polyisocyanate component (B).

21. Multiple-component polyurethane/vinyl ester hybrid foam system according to at least one of the preceding claims, **characterized in that** the polyol component (A), the polyisocyanate component (B) and the component (C) are contained in a two- or multichamber apparatus separately from each other in a reaction-inhibiting fashion, and under application conditions can be made to react while maintaining the NCO:OH ratio of more than 1:1.

22. Use of the multiple-component polyurethane/vinyl ester hybrid foam system according to at least one of the preceding claims as material for coating surfaces and for foam-filling openings and cable and pipe penetrations in walls, floors and/or ceilings of buildings for soundproofing and/or fireproofing purposes.

## Revendications

1. Système de mousse hybride à plusieurs composants polyuréthanne/ester de vinyle pour la formation d'une mousse à gradient avec des zones de mousse souple et dure, avec un composant polyol (A) qui contient au moins un polyol avec une fonctionnalité de OH d'au moins 2, un catalyseur pour la réaction du polyol avec le polyisocyanate, au moins un monomère de vinyle polymérisable, de l'eau ou un agent moussant sur la base d'un gaz comprimé ou liquéfié comme porogène, un composant polyisocyanate (B) qui contient au moins un polyisocyanate avec une fonctionnalité de NCO d'au moins 2, et un composant (C) qui contient un catalyseur pour la polymérisation du monomère de vinyle, sachant que les composants (A) à (C) sont présents séparés les uns des autres en vue d'inhiber la réaction et ne réagissent que lors du mélangeage moyennant polycondensation et polymérisation, **caractérisé en ce que** le composant polyol (A) contient comme monomère de vinyle un mélange d'esters de vinyle en au moins un ester d'hydroxyvinyle polymérisable et au moins un ester de vinyle ramifié, au moins trifonctionnel, polymérisable, et **en ce que** le composant polyisocyanate (B) contient un générateur de radicaux thermiquement activable comme catalyseur pour la polymérisation des monomères de vinyle, avec la condition que la proportion pondérale du mélange d'esters de vinyle est plus grande que la proportion pondérale dudit au moins un polyol et aussi plus grande que la proportion pondérale dudit au moins un polyisocyanate.

2. Système de mousse hybride à plusieurs composants polyuréthanne/ester de vinyle selon la revendication 1, **caractérisé en ce que** le mélange d'esters de vinyle contient comme ester d'hydroxyvinyle du 2-hydroxyéthyl(méth)acrylate et/ou du 2-hydroxypropyl(méth)acrylate et comme ester de vinyle ramifié au moins trifonctionnel du triméthylolpropane tri(méth)acrylate et/ou une résine uréthanne-ester de vinyle trifonctionnelle ou de fonctionnalité plus élevée.

3. Système de mousse hybride à plusieurs composants polyuréthanne/ester de vinyle selon la revendication 1 ou 2, **caractérisé en ce que** le rapport pondéral de l'ester d'hydroxyvinyle polymérisable à l'ester de vinyle ramifié, au moins trifonctionnel, polymérisable, dans le mélange d'esters de vinyle est compris dans l'intervalle de 1 : 10 à 10 : 1, de préférence de 2 : 5 à 5 : 1.

4. Système de mousse hybride à plusieurs composants polyuréthanne/ester de vinyle selon la revendication 1 ou 2, **caractérisé en ce que** le mélange d'esters de vinyle contient en plus un groupe comprenant au moins un ester d'hydroxyvinyle difonctionnel polymérisable parmi le 1,4-butane diol méthacrylate, le 2-bisphénol-A-diméthacrylate éthoxylé, et l'ester de vinyle de la formule générale (1) suivante : 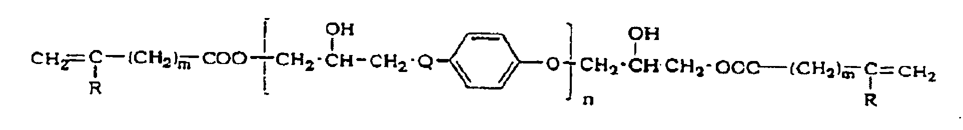 dans laquelle R signifie un hydrogène ou un groupe alkyle en C1 à C4, m est nul ou est un nombre entier avec une valeur de 1 à 4, et n est 1 ou 2.

5. Système de mousse hybride à plusieurs composants polyuréthanne/ester de vinyle selon les revendications 1 à 4, **caractérisé en ce que** le mélange d'esters de vinyle du composant polyol (A) contient comme monomère de vinyle supplémentaire au moins un représentant du groupe comprenant des alkyl(méth)acrylates, des aryl (méth)acrylates, des hydroxyalkyl(méth)acrylates, des (méth)acrylamides, des éthers (méth)acrylates, des (méth)acrylates multifonctionnels réticulants, des résines ester de vinyle uréthanne, des bisphénol-A-di(méth)acrylates alcoxylés, des bisphénol-F-di(méth)acrylates alcoxylés, de l'acide (méth)acrylique, de l'anhydride d'acide (méth)acrylique et du (méth)acrylonitrile.

6. Système de mousse hybride à plusieurs composants polyuréthanne/ester de vinyle selon la revendication 5, **caractérisé en ce que** le mélange d'esters de vinyle du composant polyol (A) contient comme monomère de vinyle supplémentaire au moins un représentant du groupe comprenant le méthyl(méth)acrylate, l'éthyl(méth)acrylate, le n-butyl(méth)acrylate, l'isobutyl(méth)acrylate, le n-hexyl(méth)acrylate, le 2-éthylhexyl(méth)acrylate, l'isodécyl(méth)acrylate, l'ester d'acide (méth)acrylique 13,0, l'ester d'acide (méth)acrylique 17,4, le cyclohexyl(méth)acrylate, l'isobornyl(méth)acrylate, le benzyl(méth)acrylate, le 3,3,5-triméthylcyclohexyl(méth)acrylate, l'isotridécyl(méth)acrylate, le stéaryl(méth)acrylate, le 2-hydroxyéthyl(méth)acrylate, l'hydroxypropyl(méth)acrylate, le 2-diméthylaminoéthylméthacrylate, le 3-diméthylaminopropyl(méth)acrylamide, le chlorure de 2-triméthylammoniuméthyl(méth)acrylate, le chlorure de 3-triméthylammoniumpropyl(méth)acrylamide, le 2-tert.-butylaminoéthyl(méth)acrylate, le (méth)acrylamide, le n-méthylol(méth)acrylamide, le n-butoxyméthyl(méth)acrylamide, l'éthyltriglycol(méth)acrylate, le tétrahydrofurfuryl(méth)acrylate, le méthoxypolyéthylèneglycol-350-(méth)acrylate, le méthoxypolyéthylèneglycol-500-(méth)acrylate, le méthoxypolyéthylèneglycol-750-(méth)acrylate, le méthoxypolyéthylèneglycol-1000-(méth)acrylate, le mélange d'ester d'acide (méth)acrylique et d'alcools gras en C₁₆ à C₁₈ éthoxylés (25 mol EO), le butyldiglycol(méth)acrylate, l'allyl(méth)acrylate, l'éthylèneglycoldi(méth)acrylate, le diéthylèneglycoldi(méth)acrylate, le triéthylèneglycoldi(méth)acrylate, le tétraéthylèneglycoldi(méth)acrylate, le polyéthylèneglycol-200-di(méth)acrylate, le polyéthylèneglycol-400-di(méth)acrylate, le polyéthylèneglycol-600-di(méth)acrylate, le polyéthylèneglycol-1000-di(méth)acrylate, le 1,3-butanedioldi(méth)acrylate, le 1,4-butandioldi(méth)acrylate, le 1,6-hexanedioldi(méth)acrylate, le 1,12-dodécanedioldi(méth)acrylate, le glycéroldi(méth)acrylate, le triméthylolpropanetri(méth)acrylate, le diuréthannedi(méth)acrylate, des produits de réaction d'isocyanate polyfonctionnel, le cas échéant d'alcool multivalent et/ou le cas échéant d'amine multivalente et un hydroxylalkyl(méth)acrylate, un bisphénol-A-di(méth)acrylate éthoxylé (2 EO), un bisphénol-A-di(méth)acrylate éthoxylé (10 EO), l'acide (méth)acrylique, l'anhydride d'acide (méth)acrylique, l'ester d'acide maléique et de mono-2-(méth)acryloyloxyéthyle, la N-(2-(méth)acryloyloxyéthyl)éthylène urée, la N-(2-(méth)acryloyloxyéthyl)éthylène urée, l'éthylènecyanhydrine et l'acétone cyanhydrine.

7. Système de mousse hybride à plusieurs composants polyuréthanne/ester de vinyle selon les revendications 1 à 6**, caractérisé en ce que** le rapport de la proportion pondérale du mélange d'esters de vinyle à la proportion pondérale dudit au moins un polyol, de même qu'à la proportion pondérale dudit au moins un polyisocyanate est compris entre 1,01 et 5,00 à 1, de préférence entre 1,05 et 3,00 à 1.

8. Système de mousse hybride à plusieurs composants polyuréthanne/ester de vinyle selon les revendications 1 à 7, **caractérisé en ce que** le générateur de radicaux est activable thermiquement à une température comprise entre 60 °C et 90 °C.

9. Système de mousse hybride à plusieurs composants polyuréthanne/ester de vinyle selon la revendication 8, **caractérisé en ce qu'**il contient comme générateur de radicaux thermiquement activable pour la polymérisation des monomères de vinyle un durcisseur à peroxyde, flegmatisé le cas échéant par un ester de l'acide phtalique, de la craie, du kaolin, de l'huile de silicone, des aliphatiques et/ou de l'huile de paraffine.

10. Système de mousse hybride à plusieurs composants polyuréthanne/ester de vinyle selon la revendication 9, **caractérisé en ce qu'**il contient comme durcisseur à peroxyde au moins un représentant du groupe comprenant le di-(4-tert.-butylcyclohexyl)peroxydicarbonate, le dicétylperoxydicarbonate, le dicyclohexylperoxydicarbonate, le dimyristylperoxydicarbonate, le tert.-butylperoxynéodécanoate, le tert.-amylperoxypivalate, le dilauroylperoxyde, le dibenzoylperoxyde, le tert.-amylperoxy-2-éthylhexanoate, le tert.-butylperoxy-2-éthylhexanoat, le disuccinoylperoxyde, le tert.-amylperoxy-2-éthylhexylcarbonate, le 1,1-di- (tert.-butylperoxy)-3,3,5- triméthylcyclohexane, le 1,1-di-(tert.-butylperoxy)cyclohexane, le tert.-butylperoxyisopropylcarbonate, le tert.-butylperoxy-3,5,5-triméthylhexanoate, le tert.-butylperoxy-2-éthylhexylcarbonate, le tert.-butylperoxyacetate, le tert.-amylperoxybenzoate, le tert.-butylperoxybenzoate, le 2,2-di-(tert.-butylperoxy)butane, le dicumylperoxyde, le tert.-butylcumylperoxyde, le di(tert.-amyl)-peroxyde, le di(tert.-butyl)-peroxyde, le tert.-butylhydroperoxyde, le peroxodisulfate d'ammonium, le peroxodisulfate de sodium, le peroxodisulfate de potassium.

11. Système de mousse hybride à plusieurs composants polyuréthanne/ester de vinyle selon l'une au moins des revendications précédentes, **caractérisé en ce que** le composant polyol (A) contient 5 à 60 % en poids, de préférence 10 à 50 % en poids d'au moins un polyol, 0,01 à 10 % en poids, de préférence 0 à 5 % en poids d'eau comme agent moussant, 0 à 50 % en poids, de préférence 0,5 à 40 % en poids d'au moins un ester d'hydroxyvinyle polymérisable, 0,1 à 50 % en poids, de préférence 0,5 à 40 % en poids d'au moins un ester de vinyle trifonctionnel polymérisable, 0 à 10 % en poids, de préférence 0,5 à 40 % en poids d'au moins un monomère de vinyle supplémentaire, 0,1 à 50 % en poids, de préférence 0,5 à 40 % en poids d'au moins un ester d'hydroxyvinyle difonctionnel polymérisable, 0,1 à 50 % en poids, de préférence 0,5 à 5 % en poids d'au moins un stabilisateur de cellules et 0 à 10 % en poids, de préférence 0,1 à 5 % en poids d'au moins un catalyseur pour la réaction du polyol avec le polyisocyanate, **en ce que** le composant polyisocyanate (B) contient 1 à 50 % en poids, de préférence 10 à 40 % en poids d'au moins un polyisocyanate et **en ce que** le composant (C) contient 0,01 à 10 % en poids, de préférence 0,1 à 5 % en poids d'au moins un générateur de radicaux thermiquement activable pour la polymérisation des monomères de vinyle, rapporté à chaque fois au poids total des composants (A), (B) et (C), la quantité totale de ces composants faisant 100 % en poids.

12. Système de mousse hybride à plusieurs composants polyuréthanne/ester de vinyle selon l'une au moins des revendications précédentes, **caractérisé en ce que** le composant polyol (A) contient comme catalyseur pour la réaction du polyol avec le polyisocyanate une amine secondaire ou tertiaire aromatique et/ou aliphatique, un composé organométallique d'un métal du groupe consistant en le Zn, le Sn, le Mn, le Mg, le Bi, le Sb, le Pb et le Ca, en particulier un octoate, un naphténate, ou un acétylacétonate.

13. Système de mousse hybride à plusieurs composants polyuréthanne/ester de vinyle selon l'une au moins des revendications précédentes, **caractérisé en ce que** le composant polyol (A) et/ou le composant polyisocyanate (B) contiennent au moins un matériau intumescent sur la base d'un générateur d'acide, d'un composé délivrant du carbone et d'un générateur de gaz, un graphite expansible, un silicate stratifié expansible et/ou un agent ignifuge supplémentaire organique ou inorganique.

14. Système de mousse hybride à plusieurs composants polyuréthanne/ester de vinyle selon la revendication 13, **caractérisé en ce que,** comme agent ignifuge, du phosphore rouge, un composé phosphoré, en particulier un ester halogéné de l'acide phosphorique comme le phosphate de trichloréthyle, le phosphate de tris(2-chlorisopropyle), le phosphate de triphényle, ou le phosphate de tris(2-chloréthyle), un hydroxyde métallique, en particulier de l'hydroxyde d'aluminium ou de l'hydroxyde de magnésium, du borate de zinc et du polyphosphate d'ammonium, ainsi que, le cas échéant, de l'oxyde d'antimoine y sont contenus comme synergistes.

15. Système de mousse hybride à plusieurs composants polyuréthanne/ester de vinyle selon l'une au moins des revendications précédentes, **caractérisé en ce que** le composant polyol (A) et/ou le composant polyisocyanate (B) contiennent en plus au moins une charge inorganique.

16. Système de mousse hybride à plusieurs composants polyuréthanne/ester de vinyle selon la revendication 15, **caractérisé en ce qu'**il contient comme charge inorganique un oxyde métallique, un borate, un carbonate, de préférence de la craie, un silicate, du kaolin, de la poudre de verre, de l'oxyde de fer, de l'oxyde de titane, du dioxyde de silicium, une mousse inorganique, de préférence de la mousse d'argile expansée, de la perlite et de la vermiculite et/ou des billes creuses en matériau silicique ou en verre.

17. Système de mousse hybride à plusieurs composants polyuréthanne/ester de vinyle selon l'une au moins des revendications précédentes, **caractérisé en ce que** le composant polyol (A) et/ou le composant polyisocyanate (B) contiennent en plus des substances auxiliaires et des additifs, des stabilisateurs, des plastifiants, des catalyseurs, des agents thixotropes, des diluants ou des solvants et/ou des colorants dans les quantités habituelles.

18. Système de mousse hybride à plusieurs composants polyuréthanne/ester de vinyle selon la revendication 17, **caractérisé en ce que** de l'acide silicique hydrophobe ou hydrophobé est contenu comme agent de thixotropie.

19. Système de mousse hybride à plusieurs composants polyuréthanne/ester de vinyle selon la revendication 18, **caractérisé en ce que** comme diluant ou solvant est contenu un alcool aliphatique comme le butanol.

20. Système de mousse hybride à plusieurs composants polyuréthanne/ester de vinyle selon l'une au moins des revendications précédentes, **caractérisé par** un système de mousse hybride à deux composants polyuréthanne/ester de vinyle, pour lequel le composant (C) est présent séparément pour fonction d'inhibition de réaction dans le composant polyol (A) et/ou dans le composant polyisocyanate (B).

21. Système de mousse hybride à plusieurs composants polyuréthanne/ester de vinyle selon l'une au moins des revendications précédentes, **caractérisé en ce que** le composant polyol (A), le composant polyisocyanate (B) et le composant (C) sont contenus pour fonction d'inhibition de réaction séparés les uns des autres dans un dispositif à deux ou plusieurs compartiments, et peuvent être amenés à réagir sous les conditions d'application moyennant l'observation du rapport NCO : OH de plus de 1 : 1.

22. Utilisation du système de mousse hybride à plusieurs composants polyuréthanne/ester de vinyle selon l'une au moins des revendications précédentes comme matériau de revêtement de surfaces et d'obturation par mousse d'ouvertures, de passages de câbles et de tuyauteries dans des murs, des sols et/ou des plafonds de bâtiments, à des fins d'insonorisation et/ou de protection contre les incendies.
